# EUROPEAN PATENT APPLICATION

(11) **EP 4 614 022 A1**
(43) Date of publication of application: **10.09.2025**
(21) Application number: 23885668.6
(22) Date of filing: 27.10.2023
(51) Int. Cl.: F16C 41/00, F16C 19/52

(54) **BEARING DEVICE**

(30) Priority: 04.11.2022 JP 2022177294
(71) Applicant: NTN Corporation, Osaka-shi Osaka 530-0005 (JP)
(72) Inventor: KONDOU, Daichi, Iwata-shi, Shizuoka 438-8510 (JP); FUKUSHIMA, Yasuyuki, Iwata-shi, Shizuoka 438-8510 (JP)
(74) Representative: Grünecker Patent- und Rechtsanwälte PartG mbB
(86) International application number: PCT/JP2023/038846
(87) International publication number: WO 2024/095912

(57) **Abstract**

A bearing device (1) is provided which includes a tubular outer ring spacer (26) axially sandwiched between a first outer ring (32) of a first bearing (24) and a second outer ring (36) of a second bearing (25). The outer ring spacer (26) has a double structure in which an outer annulus (26a) and an inner annulus (26b) are used. A circuit (30) in an internal space of the outer ring spacer (26) is divided into a plurality of circuit parts, and circuit boards (30a) provided with the circuit parts, respectively, each have mounting surfaces disposed in parallel with the axial direction of the outer ring spacer (26). The circuit boards (30a) are partially fitted in respective grooves (26e) disposed in the inner annulus (26b).

## Description

### TECHNICAL FIELD

The present invention relates to a bearing device including two rolling bearings and sensors attached to a spacer between the two rolling bearings.

### BACKGROUND ART

In machine tools such as machining centers and lathes and/or other industrial machines, a spindle device is used which rotatably supports a spindle (rotary shaft) to which a target object such as a tool or a workpiece is attached. In the field in which such a spindle device is used, it is required to increase the rotational speed of the spindle for the purpose of improving machining accuracy and production efficiency, and to ensure higher functionality and higher performance of condition monitoring.

In order to meet such needs, as a bearing device supporting a spindle of a spindle device, a bearing device provided with various sensors has been proposed.

For example, the below-identified Patent Document 1 proposes a bearing device including two rolling bearings that are disposed in a tubular housing so as to be axially spaced apart from each other. Sensors such as a vibration sensor and a temperature sensor, and a circuit for processing outputs of the sensors are disposed in an outer ring spacer disposed between outer rings of the two bearings. A pump for discharging lubricating oil is controlled in accordance with outputs of the sensors so as to prevent, e.g., seizure of the bearings due to a high rotational speed of a spindle.

In addition to this, many bearing devices are practically used in which a load sensor is attached to an outer ring spacer between two rolling bearings so as to detect an increase in preload due to heat or the like generated from the bearings, and a change in cutting load or the like applied to a spindle from the outside, thereby ensuring higher functionality and higher performance of condition monitoring.

### PRIOR ART DOCUMENT

### PATENT DOCUMENT

Patent Document 1: Japanese Unexamined Patent Application Publication No. 2020-031488

### SUMMARY OF THE INVENTION

### PROBLEMS TO BE SOLVED BY THE INVENTION

In the bearing device of Patent Document 1, the circuit for processing outputs of the sensors is divided into a plurality of circuit parts, and the circuit parts are mounted respectively and separately on a plurality of flat plate-shaped circuit boards, and are connected to each other via an electric wire.

The circuit boards are stored in the outer ring spacer such that mounting surfaces (front and rear surfaces) of the circuit boards provided with electronic components such as the sensors and the circuit parts are parallel to the axial direction of the outer ring spacer. Therefore, it is possible to ensure large mounting areas, and mount many electronic components, compared to a case where the mounting surfaces are disposed perpendicularly to the axial direction of the outer ring spacer.

However, the circuit boards connected to each other via the electric wire are not fixed to the outer ring spacer, and are movably disposed in the outer ring spacer. Therefore, the circuit boards that are not fixed thereto could repeatedly collide against the inner surface of the outer ring spacer due to vibration during rotation of the spindle, thereby damaging the circuit boards per se and/or the electronic components provided on the mounting surfaces.

In view of this, it is an object of the present invention to provide a bearing device in which many electronic components are mounted, and in which the built-in electronic components stably function for a long period.

### MEANS FOR SOLVING THE PROBLEMS

In order to achieve the above object, the present invention provides a bearing device comprising: a tubular housing; and a first bearing and a second bearing disposed in an interior of the tubular housing so as to be axially spaced apart from each other, wherein the first bearing includes: a first outer ring; a first inner ring rotatably disposed radially inward of the first outer ring; and a plurality of first rolling elements disposed between the first outer ring and the first inner ring, wherein the second bearing includes: a second outer ring; a second inner ring rotatably disposed radially inward of the second outer ring; and a plurality of second rolling elements disposed between the second outer ring and the second inner ring, wherein a tubular outer ring spacer is axially sandwiched between the first outer ring and the second outer ring, wherein the outer ring spacer comprises: an outer annulus that is axially in contact with the first outer ring and the second outer ring; and an inner annulus disposed radially inward of the outer annulus, and wherein a sensor and a circuit for processing an output of the sensor are disposed in a space defined between the outer annulus and the inner annulus, characterized in that the circuit is divided into a plurality of circuit parts, the circuit parts are mounted, respectively and separately, on a plurality of circuit boards having a flat plate shape, and the circuit boards are connected to each other via an electric wire, and wherein the circuit boards are fixed, respectively, to board fixing portions disposed in the outer ring spacer (arrangement 1).

In the above arrangement 1, since the circuit boards provided with the circuit parts each have mounting surfaces disposed in parallel with the axial direction of the outer ring spacer, it is possible to increase the mounting areas of the circuit boards, and mount many electronic components. In addition, the circuit boards fixed to the board fixing portions of the outer ring spacer never collide against the outer ring spacer due to vibration or the like during rotation of a rotary shaft supported by the bearing device, so that the electronic components stably function for a long period.

In the above arrangement 1, an arrangement 2 may be used in which the circuit includes a wireless communication module. A antenna for wireless communication that is formed on a circuit board has directivity with strong radio field intensity in a normal direction of the surface formed with the antenna. If the arrangement 2 is used, an arrangement 3 is desirably used in which, of the circuit boards, the circuit board provided with the wireless communication module has a mounting surface that is provided with the wireless communication module, and that is disposed perpendicularly to an axial direction of the outer ring spacer. With this arrangement, since the direction in which the radio field intensity of the wireless communication module is strong is parallel to the axial direction of the bearing device, its radio wave is likely to reach the outside of an apparatus including the bearing device, thus enabling stabler communication with an external control device or the like.

In any one of the above arrangements 1 to 3, an arrangement 4 is desirably used in which a preload is applied to the first bearing and the second bearing, the preload acts on only the outer annulus of the outer ring spacer, and the sensor is disposed in contact with the outer annulus. With this arrangement, it is possible to detect, with higher sensitivity, preload changes, temperature changes in the bearings, or changes in vibrations or the like caused by damage to the bearings or machining abnormality.

In any one of the above arrangements 1 to 4, the outer annulus is desirably made of a metal or a ceramic material so as to have high rigidity (arrangement 5). Also, in any one of the above arrangements 1 to 5, the inner annulus is desirably made of a resin in view of easy formation of the board fixing portions (arrangement 6).

In the above arrangement 2 or 3, an arrangement 7 is desirably used in which a lid is disposed to close one axial side of the space between the outer annulus and the inner annulus, and the lid is made of a nonmagnetic material.

### EFFECTS OF THE INVENTION

With respect to the bearing device of the present invention, as described above, since the circuit for processing an output of the sensor is divided into a plurality of circuit parts, and the circuit boards provided with electronic components such as the circuit parts are fixed to the respective board fixing portions of the outer ring spacer, it is possible to mount many electronic components. Also, the circuit boards never collide against the outer ring spacer due to vibration or the like, and the electronic components stably function for a long period.

### BRIEF DESCRIPTION OF THE DRAWINGS

Fig. 1 is a sectional view of a spindle device for a machine tool in which a bearing device according to an embodiment of the present invention is used.
Fig. 2 is an enlarged sectional view of a portion of Fig. 1.
Fig. 3 is a sectional view of an outer ring spacer that is taken along line III-III in Fig. 2.
Fig. 4 is an exploded perspective view of the outer ring spacer of Fig. 1.
Fig. 5 is an exploded perspective view illustrating a variation of the outer ring spacer of Fig. 1.

### BEST MODE FOR CARRYING OUT THE INVENTION

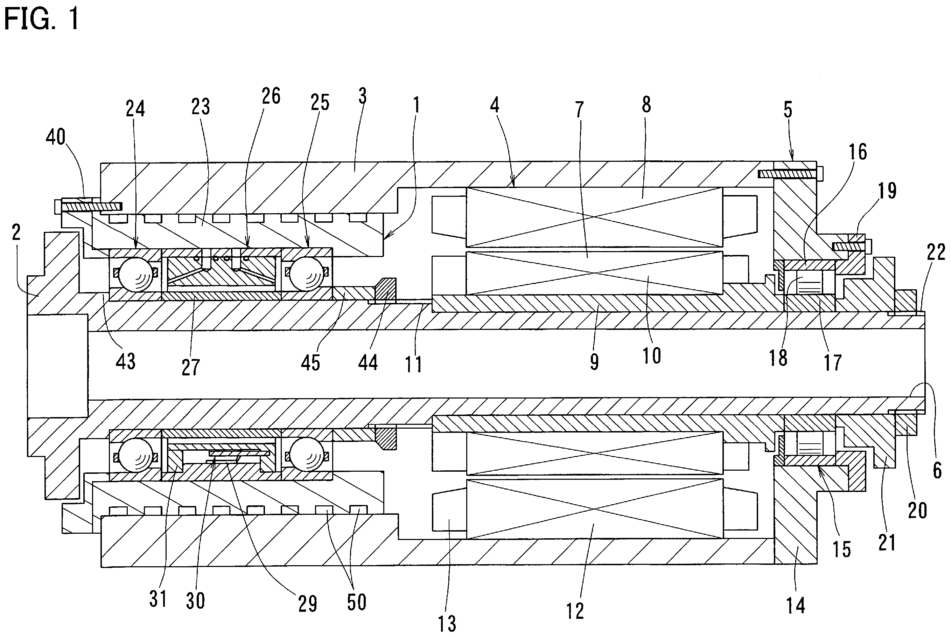

An embodiment of the present invention is described below with reference to the drawings. Fig. 1 illustrates a spindle device for a machine tool in which a bearing device 1 according to the embodiment of the present invention is used. The spindle device includes a spindle 2 of a machine tool, an outer tube 3 in which the spindle 2 is received, a motor 4 configured to rotationally drive the spindle 2, the bearing device 1 of the embodiment, which rotatably supports the spindle 2 on the axial front side (left side in Fig. 1) of the motor 4, and a rear bearing device 5 rotatably supporting the spindle 2 on the axial rear side of the motor 4.

The outer tube 3 is a hollow tubular member having open ends on both sides, and the bearing device 1 and the motor 4 are received in the outer tube 3 from the axial front side toward the axial rear side, in the order of the elements 1 and 4. While the outer tube 3 in Fig. 1 is a seamless integral tube comprising a portion in which the bearing device 1 is received; and a portion in which the motor 4 is received, the outer tube 3 may comprise these two portions as separate portions fixedly coupled to each other.

The spindle 2 is inserted in the outer tube 3 such that the axial front end thereof protrudes beyond a front end opening of the outer tube 3. A chuck (not shown) for gripping a tool or a workpiece is to be detachably attached to the front end of the spindle 2. The spindle 2 has a through hole 6 which axially extends through the spindle 2, and in which a drawbar (not shown) of a machine tool is axially slidably received.

The motor 4 includes a rotor 7 attached to the outer periphery of the spindle 2; and an annular stator 8 configured to apply a rotational force to the rotor 7. The rotor 7 includes a rotor sleeve 9 fitted to the outer periphery of the spindle 2; and a rotor core 10 fixed to the outer periphery of the rotor sleeve 9. The rotor core 10 comprises, e.g., laminated electromagnetic steel plates. The rotor sleeve 9 is rotationally fixed to the spindle 2 so as to rotate in unison with the spindle 2. The axial front end of the rotor sleeve 9 is axially positioned by coming into contact with a step 11 having a stepped surface that is formed on the outer periphery of the spindle 2, and that faces axially backward.

The stator 8 includes a stator core 12 fixed to the inner periphery of the outer tube 3, and electromagnetic coils 13 wound, respectively, around a plurality of teeth portions formed on the stator core 12 so as to be circumferentially spaced apart from each other. When the electromagnetic coils 13 are energized, due to the electromagnetic force acting between the stator core 12 and the rotor core 10, a rotational force is generated at the rotor core 10 such that the rotor 7 and the spindle 2 rotate in unison with each other. While, in this embodiment, the motor 4 is an electromagnetic motor configured to generate a rotational force due to electric power, a motor configured to generate a rotational force due to a different power source such as compressed air may be used as the motor 4 instead of such an electromagnetic motor.

The rear bearing device 5 includes an annular bearing support member 14 coaxially fixed to the rear end of the outer tube 3, and a rolling bearing 15 attached to the inner periphery of the bearing support member 14. The rolling bearing 15 is a cylindrical roller bearing including an outer ring 16 fitted to the inner periphery of the bearing support member 14, an inner ring 17 fitted to the outer periphery of the spindle 2, and a plurality of cylindrical rollers 18 disposed between the outer ring 16 and the inner ring 17.

An outer ring pressing member 19 is attached to the bearing support member 14. The outer ring pressing member 19 fixes the axial position of the outer ring 16 by coming into contact with the side surface of the outer ring 16 on the axial rear side. A nut member 20 pressing the inner ring 17 toward the axial front side, and an annular spacer 21 disposed between the inner ring 17 and the nut member 20 are mounted to the outer periphery of the spindle 2. The nut member 20 is threadedly coupled to an internal thread 22 formed in the outer periphery of the spindle 2 at its rear end. The spacer 21 has an axial front end in contact with the side surface of the inner ring 17 on the axial rear side, and an axial rear end in contact with the side surface of the nut member 20 on the axial front side. The inner ring 17 has an axial front end in contact with the axial rear end of the rotor sleeve 9.

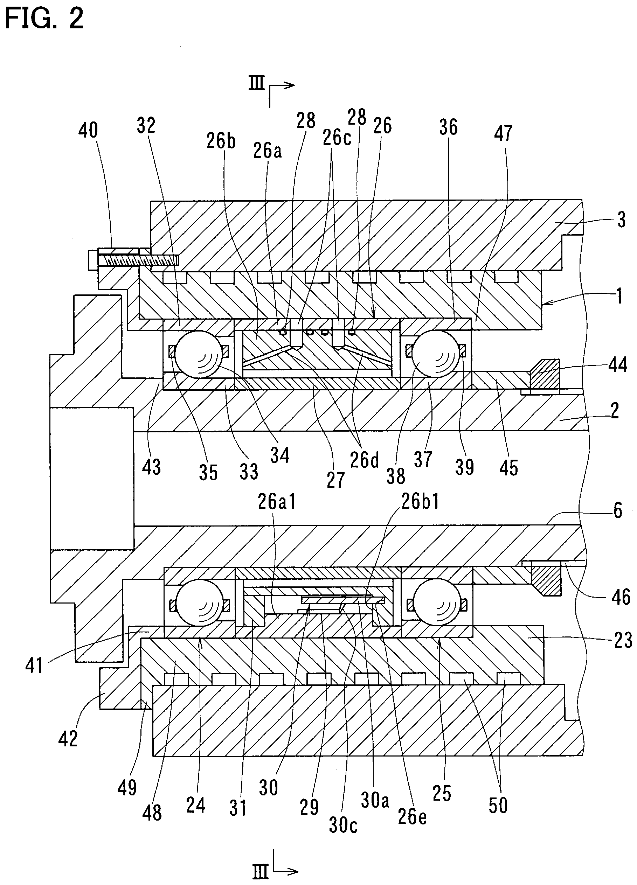

As illustrated in Figs. 1 and 2, the bearing device 1 includes a housing 23 fixed to the outer tube 3, a first bearing 24 fitted to the inner periphery of the housing 23, a second bearing 25 fitted to the inner periphery of the housing 23 so as to be located on the axial rear side of the first bearing 24, and an outer ring spacer 26 and an inner ring spacer 27 that are axially sandwiched between the first bearing 24 and the second bearing 25. The first bearing 24 and the second bearing 25 support the spindle 2.

The first bearing 24 is an angular ball bearing including a non-rotatable first outer ring 32 fitted to the inner periphery of the housing 23, a first inner ring 33 rotatably disposed radially inward of the first outer ring 32, a plurality of first rolling elements (balls in this embodiment) 34 disposed between the first outer ring 32 and the first inner ring 33, and a cage 35 rollably retaining the first rolling elements 34.

The second bearing 25 is an angular ball bearing including a non-rotatable second outer ring 36 that is disposed axially rearward of the first outer ring 32 so as to spaced apart from the first outer ring 32, and that is fitted to the inner periphery of the housing 23 a second inner ring 37 rotatably disposed radially inward of the second outer ring 36, a plurality of second rolling elements (balls in this embodiment) 38 disposed between the second outer ring 36 and the second inner ring 37, and a cage 39 rollably retaining the second rolling elements 38.

With respect to the first bearing 24, a straight line connecting together the contact point between the first inner ring 33 and each first rolling element 34 and the contact point between the first outer ring 32 and the first rolling element 34 is inclined axially rearward from the radially inner side toward the radially outer side. On the other hand, with respect to the second bearing 25, a straight line connecting together the contact point between the second inner ring 37 and each second rolling element 38 and the contact point between the second outer ring 36 and the second rolling element 38 is inclined axially forward from the radially inner side toward the radially outer side. That is, the first bearing 24 and the second bearing 25 are arranged in a back-to-back relationship.

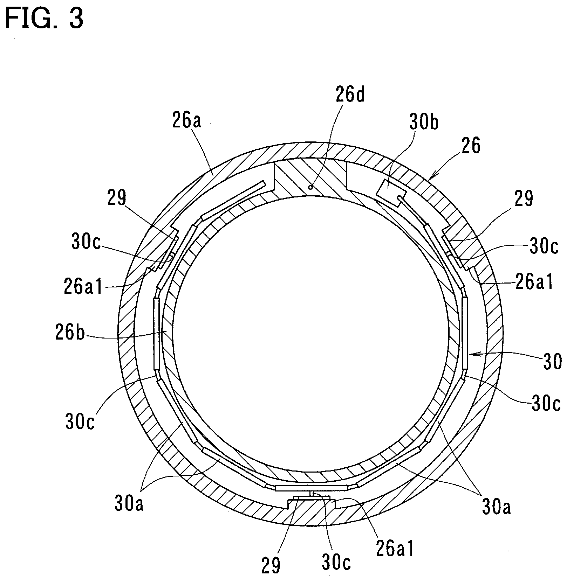

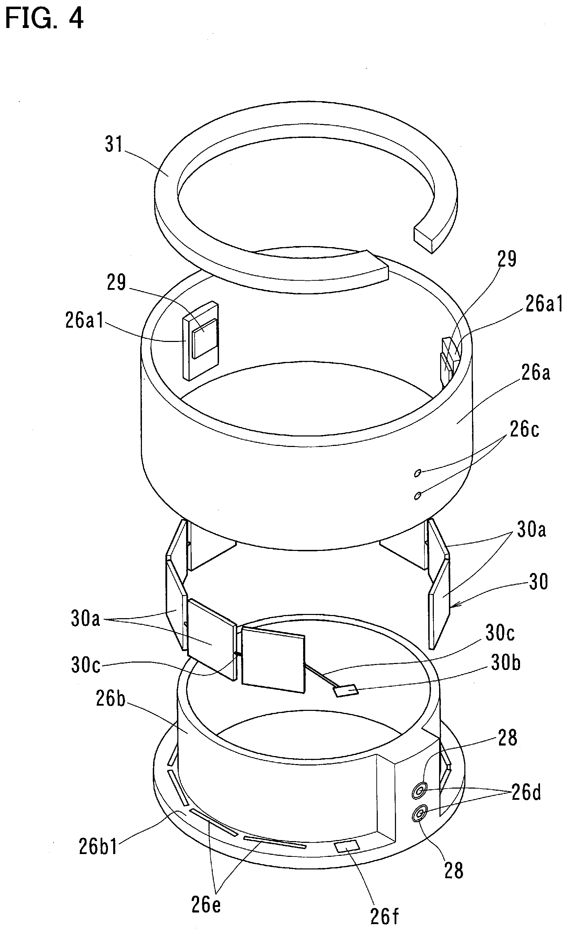

As illustrated in Figs. 1 to 4, the outer ring spacer 26 comprises an outer annulus 26a made of a metal and fitted to the inner periphery of the housing 23, and an inner annulus 26b made of a resin and disposed radially inward of the outer annulus 26a. The outer annulus 26a is a hollow cylindrical member having open ends on both sides, and has, on the inner periphery of its axial central portion, three protrusions 26a1 circumferentially disposed at equal intervals. Two lubricant supply paths 26c radially extending through the outer annulus 26a are disposed between an adjacent pair of the protrusions 26a1 so as to be located at a predetermined circumferential position.

On the other hand, the inner annulus 26b includes a protrusion on a portion of the outer periphery of a hollow cylindrical portion having open ends on both sides, and the protrusion is provided with two nozzles 26d communicating with the respective lubricant supply paths 26c of the outer annulus 26a. The portion other than the circumferential portion provided with the protrusion has an L-shaped cross section including an outward-extending flange portion at the axial rear end of the cylindrical portion, and the protrusion and the flange portion are fixed to the inner peripheral surface of the outer annulus 26a. The protrusion and the flange portion of the inner annulus 26b can be fixed by press-fitting or bonding, or by press-fitting and bonding, the protrusion and the flange portion to the inner peripheral surface of the outer annulus 26a. Also, an annular groove is disposed around the portion of each nozzle 26d connected to the corresponding lubricant supply path 26c, and an O-ring 28 is fitted in the annular groove so as to prevent leakage of a lubricant (and an oil protecting material for filling in a liquid state that is applied at an initial stage of assembly). Instead of the O-ring 28, a sealing material may be used to fill the annular groove.

The outer annulus 26a has an axial dimension larger than the axial dimension of the inner annulus 26b. Due to this, the axial front end of the outer annulus 26a is in contact with the side surface of the first outer ring 32 on the rear side, and the axial rear end of the outer annulus 26a is in contact with the side surface of the second outer ring 36 on the axial front side. On the other hand, the inner annulus 26b is not in contact with the first outer ring 32 and the second outer ring 36, and the side surface 26b1 of its flange portion on the axial front side comes into contact with the protrusions 26a1 of the outer annulus 26a on the inner periphery thereof, thereby axially positioning the inner annulus 26b.

A space is defined between the outer annulus 26a and the cylindrical portion of the inner annulus 26b, and this space is provided with sensors 29 and a circuit 30 for processing outputs of the sensors 29. The sensors 29 are, e.g., load sensors, vibration sensors, and/or temperature sensors. The sensors 29 are attached to inward-facing flat surfaces of the respective protrusions 26a1 of the outer annulus 26a on the inner periphery thereof. The circuit 30 comprises a sensor signal processor, a low-path/high-path filter, an amplifier, a power source, a wireless communication module, or the like. The circuit 30 is divided into a plurality of circuit parts, and the circuit parts are mounted, respectively and separately, on a plurality of circuit boards 30a and 30b (30b for the wireless communication module) having a rectangular flat plate shape, and are connected to each other via electric wires 30c. The sensors 29 are also connected to the circuit 30 via different electric wires 30c

The circuit boards 30a, which are provided with the circuit parts other than the wireless communication module, all have mounting surfaces (front and rear surfaces) disposed in parallel with the axial direction of the outer ring spacer 26. Only the circuit board 30b, which is provided with the wireless communication module, has mounting surfaces disposed perpendicularly to the axial direction of the outer ring spacer 26 such that a normal direction of a circuit board surface formed with an antenna, that is, a direction in which the radio field intensity of the wireless communication module is strong, is parallel to the axial direction of the bearing device 1. The circuit boards 30a and 30b are partially fitted in respective grooves 26e and 26f as board fixing portions disposed in the side surface 26b1 of the flange portion of the inner annulus 26b on its axial front side, and the circuit boards 30a and 30b are fixed thereto by an adhesive.

On the axial front side of the outer ring spacer 26, a lid 31 is fitted between the inner peripheral surface of the outer annulus 26a and the outer peripheral surface of the cylindrical portion of the inner annulus 26b so as to block entry of oil containing foreign matter into the space between the outer annulus 26a and the inner annulus 26b (space around the sensors 29 and the circuit 30). The lid 31 is fixed to the outer annulus 26a and the inner annulus 26b by an adhesive, and this adhesive also acts as a sealing material for preventing entry of oil. The lid 31 is desirably made of a nonmagnetic material having a small relative permittivity and a small dielectric loss tangent in view of ease of wireless communication.

While the outer annulus 26a desirably has high rigidity, and is thus made of a metal in the above example, the outer annulus 26a may be made of a ceramic material. On the other hand, while the inner annulus 26b can be made of a metal or a ceramic material, in view of easy formation of the board fixing portions, the inner annulus 26b is desirably made of a resin as in the above example. Also, while, in the above example, the sensors 29 are directly attached to the flat surfaces of the respective protrusion 26a1 of the outer annulus 26a on the inner periphery thereof, boards provided with the sensors may be attached to the outer annulus, and the boards and the circuit may be connected together via electric wires.

As illustrated in Figs. 1 and 2, the inner ring spacer 27 is a hollow cylindrical spacer having open ends on both sides, as with the outer annulus 26a of the outer ring spacer 26. The inner ring spacer 27 has an axial front end in contact with the side surface of the first inner ring 33 on the axial rear side, and an axial rear end in contact with the side surface of the second inner ring 37 on the axial front side.

Fixed to the axial front end of the outer tube 3 is an outer ring pressing member 40 which comes into contact with the side surface of the first outer ring 32 on the axial front side, thereby fixing the axial position of the first outer ring 32. The outer ring pressing member 40 includes a tubular portion 41 fitted to the inner periphery of the housing 23, and a flange portion 42 extending radially outward from the axial front end of the tubular portion 41. The flange portion 42 is fixed to the side surface of the housing 23 on the axial front side. Also, the outer periphery of the spindle 2 in its axial front end is formed with a step 43 that comes into contact with the side surface of the first inner ring 33 on the axial front side. The first inner ring 33 is axially positioned by coming into contact with the step 43.

Attached to the outer periphery of the spindle 2 is a preload nut 44 for pressing the second inner ring 37 toward the axial front side, and an annular spacer 45 disposed between the second inner ring 37 and the preload nut 44. The preload nut 44 is threadedly coupled to an internal thread 46 formed in a portion of the outer periphery of the spindle 2 extending axially forward from the step 11. The spacer 45 has an axial front end in contact with the side surface of the second inner ring 37 on the axial rear side, and an axial rear end in contact with the side surface of the preload nut 44 on the axial front side. The inner periphery of the housing 23 is formed with a step 47 that comes into contact with the side surface of the second outer ring 36 on the axial rear side. The second outer ring 36 is axially positioned by coming into contact with the step 47.

The housing 23 includes a tubular portion 48 fitted to the inner periphery of the outer tube 3, and a flange portion 49 extending radially outward from the axial front end of the tubular portion 48. The tubular portion 48 has, in its outer periphery, at least one cooling groove 50 in which a refrigerant for cooling the bearing device 1 flows. The at least one cooling groove 50 comprises a plurality of annular grooves formed in the outer periphery of the tubular portion 48 so as to be axially spaced apart from each other, or comprises a helical groove helically extending in the outer periphery of the tubular portion 48. The flange portion 49 comes into contact with the axial front end of the outer tube 3, and is fixed in position.

With respect to the spindle device for a machine tool having the above structure, by tightening the preload nut 44 when placing the bearing device 1 into the spindle device, its axial force is transmitted to the spacer 45, the second inner ring 37, the second rolling elements 38, the second outer ring 36, the outer annulus 26a of the outer ring spacer 26, the first outer ring 32, the first rolling elements 34, and the first inner ring 33, in the order of the elements 45, 37, 38, 36, 26a. 32, 34 and 33, and is received by the step 43 of the spindle 2, so that a preload is applied to the first bearing 24 and the second bearing 25. Also, when a machining load is applied to the spindle 2 by machining, the machining load is transmitted to the step 43 of the spindle 2, the first inner ring 33, the first rolling elements 34, the first outer ring 32, the outer annulus 26a of the outer ring spacer 26, and the second outer ring 36, in the order of the elements 43, 33, 34, 32, 26a and 36, and is received by the step 47 on the inner periphery of the housing 23. Therefore by using load sensors as the sensors 29 attached to the outer annulus 26a, a preload and a cutting load can be detected with high sensitivity.

In the bearing device 1 of this embodiment, a double structure is used in which the outer ring spacer 26 comprises the outer annulus 26a and the inner annulus 26b. The circuit 30, which is disposed together with the sensors 29 in the internal space of the outer ring spacer 26, is divided into a plurality of circuit parts. Of the circuit boards 30a and 30b, which are provided with the circuit parts, the circuit boards 30a, which are provided with the circuit parts other than the wireless communication module, have mounting surfaces (front and rear surfaces) disposed in parallel with the axial direction of the outer ring spacer 26. Therefore, it is possible to ensure large mounting areas and mount many electronic components, compared to the case where the mounting surfaces are disposed perpendicularly to the axial direction of the outer ring spacer 26.

Only the circuit board 30b, which is provided with the wireless communication module, has mounting surfaces disposed perpendicularly to the axial direction of the outer ring spacer 26 such that a direction in which the radio field intensity of the wireless communication module is strong is parallel to the axial direction of the bearing device 1. Therefore, its radio wave is likely to reach the outside of the spindle device including the bearing device 1, thus enabling stable communication with an external control device or the like.

In addition, the circuit boards 30a and 30b are fixed to the inner annulus 26b of the outer ring spacer 26 so as to collide against neither of the outer annulus 26a and the inner annulus 26b even when receiving vibration or the like during rotation of the spindle 2. Therefore, the electronic components mounted on the circuit boards 30a and 30b stably function for a long period.

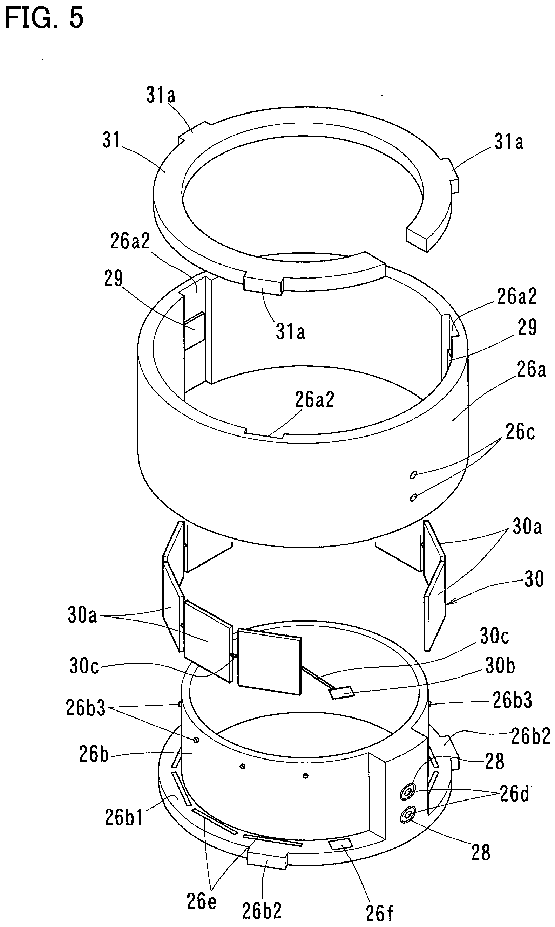

Fig. 5 illustrates a variation of the outer ring spacer 26 illustrated in Figs. 1 to 4. The outer ring spacer 26 of this variation has three recesses 26a2 circumferentially disposed, at equal intervals, on the inner periphery of the outer annulus 26a. The recesses 26a2 are formed to extend along the entire axial length of the outer annulus 26a in view of workability, and the sensors 29 are attached to the axial center portions of the respective recesses 26a2.

The inner annulus 26b is bonded and fixed to the outer annulus 26a in a state in which three protrusions 26b2 on the outer periphery of the flange portion of the inner annulus 26b are fitted in the respective recesses 26a2 of the outer annulus 26a. The inner annulus 26b is axially positioned relative to the outer annulus 26a by inserting jigs (not shown) through the lubricant supply paths 26c of the outer annulus 26a and the nozzles 26d of the inner annulus 26b such that the center axes of the outer and inner annuli 26a and 26b coincide with each other.

After the outer annulus 26a and the inner annulus 26b are boded and fixed to each other, the lid 31 is bonded and fixed to the outer annulus 26a in a state where three protrusions 31a on the outer periphery of the lid 31 are fitted in the respective recesses 26a2 of the outer annulus 26a. The lid 31 is axially positioned by bringing the side surface of the lid 31 on the axial rear side into contact with a plurality of protrusions 26b3 disposed on the outer periphery of the inner annulus 26b on the axial front side.

Since the arrangements of this variation other than the above-described arrangements, including the disposition of the circuit boards 30a and 30b and the state in which the circuit boards are fixed to the inner annulus 26b, are the same as those of Figs. 1 to 4, even if this variation is used, it is possible to obtain the same effects as obtained by using the arrangements of Figs. 1 to 4.

The above-described embodiment is a mere example in every respect, and the present invention is not limited thereto. The scope of the present invention is indicated by not the above description but the claims, and should be understood to include all modifications within the meaning and scope equivalent to the scope of the claims.

For example, the outer ring spacer partially constituting the bearing device has a double structure in which the outer annulus and the inner annulus are used. Accordingly, the outer annulus and the inner annulus may be separate members as in the embodiment, or may comprise an integral member.

Also, while, in the embodiment, the mounting surfaces of the circuit board provided with the wireless communication module are disposed perpendicularly to the axial direction of the outer ring spacer, the present invention is not limited thereto. An arrangement other than such a perpendicular arrangement may be used relative to the mounting surfaces such that a direction in which radio field intensity is strong is parallel to the axial direction of the bearing device.

The bearing device of the present invention is effectively applicable to not only the spindle device for a machine tool according to the embodiment, but also various machine tools and devices including a rotary shaft.

### DESCRIPTION OF REFERENCE NUMERALS

1: bearing device
2: spindle
3: outer tube
4: motor
23: housing
24: first bearing
25: second bearing
26: outer ring spacer
26a: outer annulus
26b: inner annulus
26e, 26f: groove (board fixing portion)
29: sensor
30: circuit
30a, 30b: circuit board
30c: electric wire
31: lid
32: first outer ring
33: first inner ring
34: first rolling element
36: second outer ring
37: second inner ring
38: second rolling element

## Claims

1. A bearing device comprising:
a tubular housing (23); and
a first bearing (24) and a second bearing (25) disposed in an interior of the tubular housing (23) so as to be axially spaced apart from each other,
wherein the first bearing (24) includes:
a first outer ring (32);
a first inner ring (33) rotatably disposed radially inward of the first outer ring (32); and
a plurality of first rolling elements (34) disposed between the first outer ring (32) and the first inner ring (33),
wherein the second bearing (25) includes:
a second outer ring (36);
a second inner ring (37) rotatably disposed radially inward of the second outer ring (36); and
a plurality of second rolling elements (38) disposed between the second outer ring (36) and the second inner ring (37),
wherein a tubular outer ring spacer (26) is axially sandwiched between the first outer ring (32) and the second outer ring (36),
wherein the outer ring spacer (26) comprises:
an outer annulus (26a) that is axially in contact with the first outer ring (32) and the second outer ring (36); and
an inner annulus (26b) disposed radially inward of the outer annulus (26a), and
wherein a sensor (29) and a circuit (30) for processing an output of the sensor (29) are disposed in a space defined between the outer annulus (26a) and the inner annulus (26b),
**characterized in that** the circuit (30) is divided into a plurality of circuit parts, the circuit parts are mounted, respectively and separately, on a plurality of circuit boards (30a, 30b) having a flat plate shape, and the circuit boards (30a, 30b) are connected to each other via an electric wire (30c), and
wherein the circuit boards (30a, 30b) are fixed, respectively, to board fixing portions (26e, 26f) disposed in the outer ring spacer (26).

2. The bearing device according to claim 1, wherein the circuit (30) includes a wireless communication module.

3. The bearing device according to claim 2, wherein, of the circuit boards (30a, 30b), the circuit board (30b) provided with the wireless communication module has a mounting surface that is provided with the wireless communication module, and that is disposed perpendicularly to an axial direction of the outer ring spacer (26).

4. The bearing device according to any one of claims 1 to 3, wherein a preload is applied to the first bearing (24) and the second bearing (25), and the preload acts on only the outer annulus (26a) of the outer ring spacer (26), and
wherein the sensor (29) is disposed in contact with the outer annulus (26a).

5. The bearing device according to any one of claims 1 to 4, wherein the outer annulus (26a) is made of a metal or a ceramic material.

6. The bearing device according to any one of claims 1 to 5, wherein the inner annulus (26b) is made of a resin.

7. The bearing device according to claim 2 or 3, wherein a lid (31) is disposed to close one axial side of the space between the outer annulus (26a) and the inner annulus (26b), and the lid (31) is made of a nonmagnetic material.
